# EUROPÄISCHE PATENTANMELDUNG

(11) **EP 1 454 530 A1**
(43) Veröffentlichungstag der Anmeldung: **08.09.2004**
(21) Anmeldenummer: 04004979.3
(22) Anmeldetag: 03.03.2004
(51) Int. Cl.: A21D 2/00, A23L 1/30

(54) **Gemisch aus einem Träger und Aloe Vera, Lebensmittel, umfassend ein Aloe Vera Gel, ein Aloe Vera Pulver und/oder das Gemisch, sowie die Verwendung von Aloe Vera Gel, Aloe Vera Pulver und/oder des Gemischs bei der Herstellung von Lebensmitteln**

(30) Priorität: 03.03.2003 DE 10309344; 04.03.2003 DE 10309528; 16.05.2003 DE 10322025
(71) Anmelder: Wolf, Alfred, 74740 Adelsheim (DE); Denninger, Klaus, 74214 Schöntal Berlichingen (DE)
(72) Erfinder: Wolf, Alfred, 74740 Adelsheim (DE); Denninger, Klaus, 74214 Schöntal Berlichingen (DE)
(74) Vertreter: Grünecker, Kinkeldey, Stockmair & Schwanhäusser Anwaltssozietät

(57) **Zusammenfassung**

Die Erfindung betrifft ein Gemisch, enthaltend Aloe Vera und einen Träger, ein Lebensmittel umfassend ein Aloe Vera Gel, ein Aloe Vera Pulver und/oder das Gemisch sowie ein Verfahren zum Herstellen des Gemischs, enthaltend Aloe Vera und einen Träger.

## Beschreibung

Die Erfindung betrifft ein Gemisch enthaltend gefrier- oder sprühgetrocknete Aloe Vera und einen Träger und Lebensmittel umfassend ein Aloe Vera Gel und/oder ein Aloe Vera Pulver und/oder ein erfindungsgemäßes Gemisch.

Es ist bereits bekannt, dass Aloe Vera Extrakte schmerzstillende, wundheilende, und allgemein gesundheitsfördernde Wirkungen haben. Des weiteren ist ein Verfahren bekannt, nach dem ein Aloe Vera Gel hergestellt werden kann, das gegenüber Oxidation stabil ist, wie in U.S. Patenten 4,446,131 und 4,465,629 beschrieben.

Daher lag der vorliegenden Erfindung die Aufgabe zugrunde, ein dem Menschen einfach zu verabreichendes Produkt zur Verfügung zu stellen, mit dem die gesundheitsfördernden Eigenschaften von Aloe Vera ausgenutzt werden können.

Die Lösung der Aufgabe ist Gemisch enthaltend Aloe Vera und einen Träger, dadurch gekennzeichnet, dass gefrier- oder sprühgetrockente Aloe Vera an einen Träger adsorbiert ist.

Die gefrier- oder sprühgetrocknete Aloe Vera ist kommerziell erhältlich und wird über eine Kälte- oder Wärmetrocknung pulverisiert.

In dem erfindungsgemäßen Gemisch ist bevorzugt etwa 5 bis etwa 95 Gew.-%, insbesondere etwa 15 bis etwa 85 Gew.-%, gefrier- oder sprühgetrocknete Aloe Vera, bezogen auf das Gesamtgewicht des Gemisches, anwesend.

In dem erfindungsgemäßen Gemisch ist bevorzugt etwa 5 bis etwa 95 Gew.-%, insbesondere etwa 15 bis etwa 85 Gew.-%. Träger, bezogen auf das Gesamtgewicht des Gemisches anwesend.

Der Träger in dem erfindungsgemäßen Gemisch ist bevorzugt ausgewählt aus der Gruppe, bestehend aus Mehl, Salz, Zucker, Mehlbestandteile, Eier, Wasser, Gelatine und Getreideflocken.

In dem erfindungsgemäßen Gemisch stammt die gefrier- oder sprühgetrocknete Aloe Vera bevorzugt von Aloe Barbadensis.

Des weiteren betrifft die Erfindung ein Verfahren zum Herstellen eines erfindungsgemäßen Gemisches, wobei
- gefrier- oder sprühgetrocknete Aloe Vera mit dem Träger gemischt wird, und
- das so erhaltene Gemisch bei einer Temperatur von ≥ (größer gleich) etwa 30 °C bei einer Luftfeuchtigkeit von ≥ (größer gleich) etwa 80% wenigsten 10 h lang einer Dampfbehandlung unterworfen wird.

Bevorzugt wird im erfindungsgemäßen Verfahren etwa 5 bis etwa 95 Gew.-%, insbesondere etwa 15 bis etwa 85 Gew.-% gefrier- oder sprühgetrocknete Aloe Vera, bezogen auf das Gesamtgewicht des Gemischs, verwendet.

Bevorzugt wird im erfindungsgemäßen Verfahren etwa 5 bis etwa 95 Gew.-%, insbesondere etwa 15 bis etwa 85 Gew.-%, Träger, bezogen auf das Gesamtgewicht des Gemisches verwendet.

Im erfindungsgemäßen Verfahren ist der Träger bevorzugt ausgewählt ist aus der Gruppe, bestehend aus Mehl, Salz, Zucker, Mehlbestandteile, Eier, Wasser, Gelatine und Getreideflocken.

Bevorzugt stammt die im erfindungsgemäßen Verfahren verwendete gefrieroder sprühgetrocknete Aloe Vera von Aloe Barbadensis.

Die Temperatur bei der Dampfbehandlung im erfindungsgemäßen Verfahren beträgt bevorzugt etwa 30° C bis etwa 100 °C, besonders bevorzugt etwa 30 °C bis etwa 50 °C, insbesondere etwa 35 °C bis etwa 40 °C.

Die Luftfeuchtigkeit bei der Dampfbehandlung im erfindungsgemäßen Verfahren beträgt bevorzugt etwa 80% bis etwa 98%, besonders bevorzugt etwa 85% bis etwa 95%, insbesondere etwa 85% bis etwa 90%.

Die Dampfbehandlung im erfindungsgemäßen Verfahren wird bevorzugt etwa 10 h bis etwa 36 h durchgeführt, besonders bevorzugt etwa 15 h bis etwa 30 h, insbesondere etwa 20 h bis etwa 25 h, durchgeführt.

Das erfindungsgemäße Gemisch, enthaltend Aloe Vera und einen Träger, ist besonders bevorzugt ein gefrier- oder sprühgetrockente Aloe Vera, das an einen Träger adsorbiert ist, und ist erhältlich nach dem vorstehend beschriebenen Verfahren. Das erfindungsgemäße Gemisch ist insbesondere verwendbar bei der Herstellung von Lebensmittel. Die Lebensmittel sind bevorzugt, wie nachstehend beschrieben.

Das erfindungsgemäße Gemisch, wenn es bei der Herstellung von Lebensmittel, insbesondere, wenn es sich um ein Bäckerei- oder Konditoreiprodukt handelt, verwendet wird, besonders wenn es nach dem erfindungsgemäßen Verfahren herstellt ist, hat die folgenden positiven Eigenschaften:
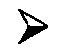 Verhinderung einer Entmischung im fertigen Rohstoff
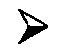 Leichte Verarbeitungsmöglichkeiten, indem der Rohstoff auch über automatische Mischanlagen problemlos gefördert werden kann
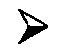 Durch die speziell ausgewogenen Zusatzmengen kommt es nicht zu negativen backtechnischen Auswirkungen
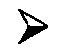 Dabei werden zusätzliche enzymatische Abbauvorgänge verhindert, die zu einem Qualitätsverlust im fertigen Gebäck führen können
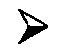 Die problemlose Verarbeitung des Rohstoffes im Gärunterbrechnungsverfahren
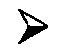 Die problemlose Verarbeitung des Rohstoffes im Langzeitgarverfahren
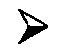 Die problemlose Verarbeitung des Rohstoffes bei der Verarbeitung als gefrostete Teiglinge oder auch in der direkten Aufarbeitung
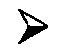 Eine Bindung der stark hygroskopischen Eigenschaften des Pflanzenrohstoffes
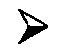 Eine gleichmäßige Verteilung der Aloe Vera im fertigen Produkt

Auswirkungen des Zusatzes des erfindungsgemäßen Gemisches auf fertige Gebäcke:
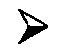 Führt zu einer saftigen, schnittfesten Krume
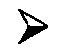 Verleiht den Backwaren eine lockere, knusprig aromatische Kruste
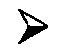 Verhindert die negativen Geschmacksauswirkungen, die in der Rohpflanze vorhanden sind
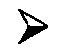 Die besondere Aufbereitung des Rohstoffes zu Aloe Vera Backmittel führt zu deutlichen Qualitätsverbesserungen der Backwaren unter Beibehaltung der betriebsspezifischen Aufarbeitungs- und Backmethoden
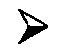 Erhalt der Aloe Vera typischen Wirkstoffeigenschaften auf den menschlichen Körper.

Wenn das erfindungsgemäße Gemisch, insbesondere, wenn es nach dem erfindungsgemäßen Verfahren hergestellt wird, bei der Herstellung von Wurstprodukten verwendet wird, hat dies die folgenden positiven Wirkungen:
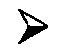 Verhinderung einer Entmischung im fertigen Rohstoff
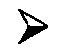 Leichte Verarbeitungsmöglichkeiten, indem der Rohstoff auch über automatische Mischanlagen problemlos gefördert werden kann
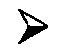 Durch die speziell ausgewogenen Zusatzmengen kommt es nicht zu negativen Auswirkungen bei der Verarbeitung oder im fertigen Endprodukt
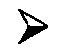 Eine gleichmäßige Verteilung der Aloe Vera im fertigen Produkt
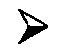 Die problemlose Verarbeitung des Rohstoffes in allen Wurstwaren und Herstellungsverfahren.

Auswirkungen des Zusatzes des erfindungsgemäßen Gemisches bei der Herstellung von Wurstmischung auf die Endprodukte:
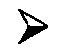 Durch den Zusatz zu der Wurstmischung verhindert man eine negative Geschmacksbeeinträchtigung der Aloe Vera als Rohware
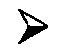 Ursprüngliche Geschmackseigenschaften und namensgebende Zutaten bleiben in ihrer Wirkung erhalten
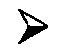 Harmonisiert unaufdringlich mit allen in der Wurstproduktion verwendeten Rohstoffen
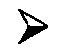 Durch die Verarbeitung des Gemisches erfolgt keine farbliche Beeinträchtigung des fertigen Produktes direkt bei der Herstellung oder auch bei der Lagerung oder im späteren Verkauf
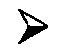 Erhalt der Aloe Vera typischen Wirkstoffeigenschaften auf den menschlichen Körper
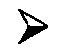 Durch den Verzicht von Konservierungs- und Zusatzstoffen keine zusätzliche Kennzeichnung außer Aloe Vera notwendig

Wenn das erfindungsgemäße Gemisch, insbesondere, wenn es nach dem erfindungsgemäßen Verfahren hergestellt wird, bei der Herstellung von Teigwaren, insbesondere Nudeln oder Pasta, verwendet wird, hat dies die folgenden positiven Wirkungen und wird bevorzugt wie folgt durchgeführt:

Bei der Verarbeitung des Backmittels kann wie bei Backwaren beschrieben die Handhabung erfolgen, nämlich indem eine Vormischung aus etwa 15 % der Eimasse und der entsprechenden Konzentratmenge hergestellt wird. Dies geschieht bei einer Temperatur von etwa 10 °C der Vormischung bis zur vollständigen Lösung des Konzentrates oder Gemisches. Danach kann vor der Teigbereitung die Vormischung mit der restlichen Eimasse gleichmäßig vermengt werden.
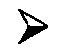 Leichte Verarbeitungsmöglichkeiten, indem der Rohstoff auch über automatische Mischanlagen problemlos gefördert werden kann

Auswirkungen des Zusatzes des erfindungsgemäßen Gemischs mit Aloe Vera auf die Endprodukte:
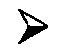 Durch die speziell ausgewogenen Zusatzmengen kommt es nicht zu negativen Auswirkungen bei der Trocknung oder dem späteren Kochvorgang
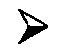 Eine gleichmäßige Verteilung der Aloe Vera im fertigen Produkt
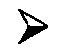 Erhalt der Aloe Vera typischen Wirkstoffeigenschaften auf den menschlichen Körper.

Durch den Verzicht von Konservierungs- und Zusatzstoffen keine zusätzliche Kennzeichnung außer Aloe Vera notwendig.

Wenn das erfindungsgemäße Gemisch, insbesondere, wenn es nach dem erfindungsgemäßen Verfahren hergestellt wird, bei der Herstellung von Honig, verwendet wird, hat dies die folgenden positiven Wirkungen und wird bevorzugt wie folgt durchgeführt:

Das aufbereitete Konzentrat oder Gemisch wird mit Wasser angefeuchtet und unter ständigem Rühren in eine temperierte Vormischung eingebracht. Nach dem völligen Auflösen in dieser Vormischung ist es möglich, diese in den entsprechenden temperierten Honig einzubringen.

Auswirkungen von Aloe Vera Gold auf die Honig - Endprodukte:
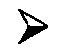 Verhinderung einer Entmischung im fertigen Rohstoff
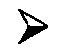 Beibehaltung der sortentypischen Geschmackseigenschaften der einzelnen Honigsorten
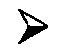 Keine farblichen Beeinträchtigungen des fertigen Produktes
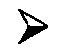 Nur minimale Eintrübungen bei klarem Honig
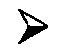 Keine Veränderung in der Haltbarkeit der Produkte
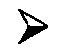 Erhalt der Aloe Vera typischen Wirkstoffeigenschaften auf den menschlichen Körper

Durch den Verzicht von Konservierungs- und Zusatzstoffen keine zusätzliche Kennzeichnung außer Aloe Vera notwendig

Eine weitere Lösung der Aufgabe ist ein Lebensmittel umfassend ein Aloe Vera Gel, ein Aloe Vera Pulver und/oder ein erfindungsgemäßes Gemisch, enthaltend Aloe Vera, adsorbiert an einen Träger.

Lebensmittel im Sinne dieser Beschreibung ist jedes Lebensmittel, das für den Menschen zum Verzehr geeignet ist. Vorzugsweise ist das Lebensmittel ausgewählt aus der Gruppe, bestehend aus Bäckerei-, Konditoreiprodukten, Getränken, Kindernahrung, Babynahrung, Kaugummi, Bonbons, Eis bzw. Eiscremes, Pralinen, Schokolade, Wurstprodukte, Honig, Müsli, Teigwaren und Gelatineprodukten.

Die Bäckerei- oder Konditoreiprodukte sind vorzugsweise ausgewählt aus der Gruppe, bestehend aus Brot, Semmeln, Kuchen, Gebäck, Crackern, Keksen und Teigwaren, wie Nudeln. Es können alle handelsüblichen Brotsorten erfindungsgemäß verwendet werden. Bevorzugte Ausführungsformen der vorliegenden Erfindung sind Vollkornbrot, Baguette, Fladenbrot, Focaccia, Weizenmischbrot, Mehrkorn-Malzbrot, Sonnenblumenbrot, Kürbiskernbrot, Graubrot. Malzbrot, Mischbrot, Roggenbrot oder Weizenbrot ebenso Brötchen, Vollkornbrötchen , Mehrkornbrötchen, Malzbrötchen, Brezeln, Plundergebäcke, süße Hefegebäcke, Kuchen, Schnitten, Dauergebäcke und Torten mit Aloe Vera Gel und/oder Aloe Vera Pulver und/oder dem erfindungsgemäßen Gemisch. Die weiteren Zutaten können kreativ nach den betrieblichen Vorgaben gestaltet werden.

Das erfindungsgemäße Brot kann helles oder dunkles Brot sein und enthält übliche Inhaltsstoffe für solche Brote. Solche üblichen Inhaltsstoffe sind vorzugsweise ausgewählt aus der Gruppe, bestehend aus Weizenmehl, Roggenmehl, Wasser, natürlicher Sauerteig oder Fertigteig, Roggenkörner gequetscht, Dinkelvollkornschrot, Hefe, iodiertes Speisesalz, Weizenkleber, Sonnenblumenkerne, Sonnenblumenöl, Malz und Gewürzen. Das Brot kann auch weitere zusätzlich natürliche Rohstoffe wie Kartoffelflocken enthalten, wodurch dem Brot eine lockere Krume verliehen wird und das Brot länger frisch bleibt. Das Brot kann auch halbgebacken sein, so dass der Endverbraucher es selbst fertigbacken kann.

Die erfindungsgemäßen Getränke können ausgewählt sein aus der Gruppe, bestehend aus Fruchtsäften, Milchgetränken, kohlensäurehaltigen Getränken und Gemüsesäften.

Die erfindungsgemäße Kindernahrung kann jede handelsübliche Kindernahrung sein und ist vorzugsweise ausgewählt aus der Gruppe, bestehend aus Gemüsebrei, Fruchtbrei und Nudel- sowie Reisgerichten in Form von Brei.

Die erfindungsgemäßen Kaugummis, Bonbons, Eis bzw. Eiscremes, Pralinen, Schokolade und Gelatineprodukten können alle handelsüblichen Produkte sein.

Das erfindungsgemäß verwendbare Aloe Vera Gel und/oder Aloe Vera Pulver und/oder das erfindungsgemäße Gemisch ist vorzugsweise in einer Menge von etwa 1 bis etwa 100 g, besonders bevorzugt etwa 10 bis etwa 100 g, insbesondere etwa 30 bis etwa 50 g, besonders bevorzugt etwa 35 bis etwa 45 g, bezogen auf 1 kg des Lebensmittels, enthalten. Wenn das Lebensmittel ein Bäckerei- oder Konditoreiprodukt, insbesondere ein Brot, ist das Aloe Vera Gel und/oder Aloe Vera Pulver und/oder das erfindungsgemäße Gemisch, insbesondere das Aloe Vera Gel und/oder das erfindungsgemäße Gemisch, bevorzugt in einer Menge von etwa 20 bis etwa 60 g, besonders bevorzugt in einer Menge von etwa 30 bis etwa 50 g, insbesondere in einer Menge von etwa 35 bis etwa 45 g, bezogen auf 1 kg Bäckerei- und/oder Konditoreiprodukt, enthalten.

Bevorzugt enthält das erfindungsgemäße Lebensmittel ein Aloe Vera Gel und/oder das erfindungsgemäße Gemisch. Das erfindungsgemäß verwendbare Aloe Vera Gel ist vorzugsweise hergestellt nach den in den US Patenten US 4,446,131 und 4,465,629 beschriebenen Verfahren oder es wurde pasteurisiert.

Das erfindungsgemäß verwendbare Aloe Vera Gel ist vorzugsweise erhältlich durch
- Gewinnen des Aloe Vera Gels aus den Blättern der Aloe Vera Pflanze, bevorzugt durch mechanisches Abtrennen des Aloe Vera Gels aus der Matrix des äußeren Cortex der Aloe Vera Blätter und Abfiltrieren der Blätterteile,
- gegebenenfalls Erwärmen des aus der Matrix gewonnen Aloe Vera Gels, vorzugsweise auf eine Temperatur von etwa 30 bis etwa 70 °C,
- gegebenenfalls Zugeben von Ascorbinsäure,
- gegebenenfalls Zugeben eines Antioxidationsmittels, wie Natriumsulfit, Natriumbisulfit, Natriummetasulfit, Calciumedetat, Propylgallat und/oder Gylcin,
- gegebenenfalls Zugeben von weiteren die Farbe stabilisierenden Mitteln, wie Tocopherol oder Vitamin E,
- gegebenenfalls Zugeben von weiteren Additiven zum Stabilisieren des Antioxidationsmittels und/oder zum Anpassen des pH-Wert auf etwa 3,0 bis etwa 3,5, wie Citronensäure,
- gegebenenfalls Zugeben von oberflächenaktiven Stoffen, wie Cetylalkohol,
- vorzugsweise Erwärmen während und nach der Zugabe vorzugsweise unter Rühren, insbesondere unter Beibehalten einer Temperatur von etwa 30 bis etwa 70 °C, bis möglicherweise vorhandene Bakterien abgetötet sind, vorzugsweise für mehr als 10 Minuten, und
- Abkühlen des Gels, vorzugsweise auf Raumtemperatur oder niedriger vorzugsweise innerhalb einer Stunde, insbesondere innerhalb von etwa 15 Minuten.

Dadurch wird ein erfindungsgemäß verwendbares Aloe Vera Gel erhalten.

Als erfindungsgemäß verwendbares Aloe Vera Gel kann auch eine Aloe Vera Fruchtpulpe verwendet werden. Zur Herstellung der Fruchtpulpe können beispielsweise nur die Blätter der Aloe Vera Barbadensis Miller verwendet werden. Die Blätter werden von Hand filetiert und es wird ausschließlich das innere Blattgel ohne Aloin verwendet. Durch entsprechende Ernteverfahren wird ein Aloeverosegehalt des fertigen Produktes von mindestens 1200 mg je Liter Fruchtpulpe erzielt. Durch Pasteurisierung kann das Produkt ohne Konservierungsstoffe oder andere Zusatzstoffe haltbar gemacht werden.

Durch entsprechende Verarbeitungs- und Filterverfahren erhält die Fruchtpulpe einen für die weitere Verarbeitung notwendigen hohen Fruchtfleischanteil und eine entsprechende Konsistenz.

Auswirkungen des Zusatzes der vorgegebenen Mengen an Aloe Vera Fruchtpulpe auf fertige Gebäcke:
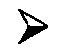 Durch die Fruchtpulpe erhalten Konditoreiwaren wie Pralinen, Sahne, Krems einen leichten mildsäuerlichen aloeveratypischen Fruchtgeschmack der individuell abgestimmt und durch spezielle Fruchtarten ergänzt werden kann.
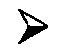 Der eingestellte Säuregehalt ermöglicht die Verarbeitung von Überzugsmassen und Geleemassen ebenso wie die Verwendung des Produktes in Fonds
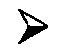 Der hohe Fruchtfleischanteil ermöglicht dem Verbraucher einen im Endprodukt deutlich wahrnehmbaren Aloe Vera Anteil beim Essen zu spüren
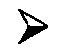 Durch die Verarbeitung der Fruchtpuple erfolgt keine farbliche Beeinträchtigung des fertigen Gebäcks direkt bei der Herstellung oder auch bei der Lagerung oder im späteren Verkauf.

Durch den Verzicht auf Konservierungs- und Zusatzstoffe ist keine zusätzliche Kennzeichnung außer Aloe Vera notwendig.

Das erfindungsgemäß verwendbare Aloe Vera Gel enthält vorzugsweise mehr als 88% Pflanzenmark bzw. Gel aus den Blättern der Aloe Vera Pflanze, bei Brot und Semmeln mind. 95% und bei sonstigen Backwaren mind. 88%, besonders bevorzugt etwa 96%, insbesondere etwa 96,2%, wobei der Rest Wasser oder sonstige Bestandteile bzw. Additive umfasst.

Inhaltsstoffe von Aloe Vera Gel, Aloe Vera Pulver und dem im erfindungsgemäßen Gemisch enthaltenen Aloe Vera sind unter anderem, Lingnine, Saponine, Anthrachinone, Vitamine, wie Vitamin A, B1, B2, B3, B6, B9, B12, C, E und Cholin, Mineralstoffe, wie Calcium, Phosphor, Kalium, Eisen, Natrium, Chlor, Mangan, Magnesium, Kupfer, Chrom und Zink, Mono- und Polysaccharide, wie Cellulose, Glukose, Manose, Aldonentose, Uronsäure, Aliinsäure, Rhamnose, Acemannan und Carrysin, essentielle Aminosäuren, wie Isoleucin, Leucin, Lysin, Methionin, Phenylalanin, Threonin und Valin, nichtessentielle Aminosäuren, wie Asparaginsäure, Glutaminsäure, Alinin, Arginin, Cystin, Glycerin, Histidin, Hydroxyprolin, Prolin, Serin und Tyrosin, Enzyme, Salicylsäure, Chrysophansäure und ätherische Öle.

Das Aloe Vera Gel und/oder das Aloe Vera Pulver und/oder das in dem erfindungsgemäßen Gemisch enthaltene Aloe Vera wird vorzugsweise aus der Aloe Vera Art Aloe Barbadensis gewonnen.

Weitere mögliche Additive zu dem Aloe Vera Gel und/oder dem Aloe Vera Pulver und/oder dem erfindungsgemäßen Gemisch sind Antioxidationsmittel, Konservierungsstoffe, Stabilisatoren, Emulgatoren und/oder Geliermitteln. Vorzugsweise sind die Antioxidationsmittel Ascorbinsäure, Alpha-Tocopherol und/oder Citronensäure. Vorzugsweise ist der Konservierungsstoff Natriumbenzoat. Vorzugsweise ist der Stabilisator Sorbit und/oder Xanthan.

Das erfindungsgemäß verwendbare Aloe Vera Gel und/oder Aloe Vera Pulver und oder das erfindungsgemäße Gemisch kann auch weitere in der Nahrungsmittelindustrie übliche Zusätze enthalten, wie Lebensmittelfarbstoff, Säurungsmittel und/oder Süßstoffe.

Des weiteren betrifft die Erfindung die Verwendung von Aloe Vera Gel und/oder Aloe Vera Pulver und/oder des erfindungsgemäßen Gemischs bei der Herstellung von Lebensmitteln, wobei diese Aloe Vera Gel und/oder Aloe Vera Pulver und/oder das erfindungsgemäße Gemisch zugegeben wird.

Die Lebensmittel, das Aloe Vera Gel und/oder Aloe Vera Pulver und/oder das erfindungsgemäße Gemisch sind wie vorstehend beschrieben.

Vorzugsweise wird das Aloe Vera Gel und/oder Aloe Vera Pulver und/oder das erfindungsgemäße Gemisch den Lebensmitteln während deren Herstellung zugegeben. Es kann aber auch nachträglich zugesetzt werden. Bei der Herstellung von Bäckerei- und/oder Konditoreiprodukten, insbesondere von Brot, wird das Aloe Vera Gel und/oder Aloe Vera Pulver und/oder das erfindungsgemäße Gemisch vorzugsweise dem Teig vor dem Backen zugesetzt.

Das erfindungsgemäße Lebensmittel, insbesondere die erfindungsgemäßen Bäckerei- und Konditoreiprodukte, fördern die Vitalität und das Wohlbefinden des Menschen beim Verzehr. Außerdem sind haben sie einen hervorragenden Geschmack und sind leicht verdaulich.

Die Erfindung wird nachstehend anhand von Beispielen weiter verdeutlicht.

### Beispiel 1 ( Aloe Vera Brot hell )

Es wurden Weizenmehl, Roggenmehl, Wasser, natürlicher Sauerteig, Kartoffelflocken, Aloe Vera Gel oder das erfindungsgemäße Gemisch, Weizenkleber, Malz, Hefe, iodiertes Speisesalz und Gewürze gemischt, so dass 500 g Brotteig erhalten wurden, und der so erhaltene Brotteig wurde gebacken. Man erhält ein helles Weizenmischbrot, das eine lockere, saftige Krume, eine lange Frischhaltung und einen aromatischen, abgerundeten Geschmack hat.

| Nährwert = Durchschnittswerte pro 100 g Brot: | | | | |
|---|---|---|---|---|
| Eiweiß | 7,8 g | kcal | 214 | |
| Kohlenhydrate | 43,7 g | kJ | 907 | |
| Fett | 0,8 g | Broteinheiten | 4,0 BE | 1 BE = 24,9g Brot |

### Beispiel 2 (Aloe Vera Brot dunkel)

Es wurden Weizenmehl, Roggenmehl, Wasser, natürlicher Sauerteig, Sonnenblumenkerne, Roggenmalzflocken, Roggenkörner gequetscht, Dinkelvollkornschrot, Aloe Vera Gel oder das erfindungsgemäße Gemisch, Kartoffelflocken, Weizenkleber, geröstetes Malz aus Gerste und Weizen, Leinsaat, Malz, Hefe, iodiertes Speisesalz und Sonnenblumenöl gemischt, so dass 750 g Brotteig erhalten wurden, und der so erhaltene Brotteig wurde gebakken. Man erhält ein dunkles Malz-Mehrkornbrot mit einem vollmundigen, leicht nussigen Geschmack, das eine lange Frischhaltung hat. Die reichlich enthaltenen Ballaststoffe sind für eine gesunde Ernährung förderlich.

| Nährwert = Durchschnittswerte pro 100 g Brot: | | | | |
|---|---|---|---|---|
| Eiweiß | 9,6 g | kcal | | 239 |
| Kohlenhydrate | 33,8 g | kJ | 1005 | |
| Fett | 7,1 g | Broteinheiten | 3,1 BE | 1 BE = 32,1 g Brot |

| Nährwert = Durchschnittswerte pro 100 g Brot: | | | | |
|---|---|---|---|---|
| Eiweiß | 7,8 g | kcal | 214 | |
| Kohlenhydrate | 43,7 g | kJ | 907 | |
| Fett | 0,8 g | Broteinheiten | 4,0 BE | 1 BE = 24,9g Brot |

### Beispiel 3 (Aloe Vera Brot hell)

Es wurden 1 kg Kartoffelflocken, 3 kg Wasser, 7 kg Weizenmehl Type 550, 0,3 kg Weizengluten, 1,75 kg Roggenmehl Type 1150, 2,1 kg Sauerteig TA 220, 0,24 kg Salz, 0,1 kg Backmalz, 0,006 kg gemahlene Muskatnuss, 0,3 kg Hefe, 3,28 kg Wasser, 0,6 kg gemahlenes Altbrot und 0,82 kg Aloe Vera Gel gemischt, wodurch 20,496 kg Brotteig erhalten wurden. Der Brotteig wurde portioniert und gebacken, wodurch ein helles Aloe Vera Brot erhalten wurde.

### Beispiel 4 (Aloe Vera Brot dunkel)

Es wurden 24 kg Wasser, 30 kg Körnermischung für Quellstück, 40 kg Wiezenmehl Type 1050, 7 kg Roggenmehl Type 1150, 22 kg Wasser, 18 kg Sauerteig TA 220, 1 kg Salz, 1 kg Hefe, 8 kg Weizenvorteig, 1 kg Kartoffelflocken und 6,3 kg Aloe Vera Gel gemischt, wodurch 158,3 kg Brotteig erhalten wurden. Der Brotteig wurde portioniert und gebacken, wodurch ein dunkles Aloe Vera Brot erhalten wurde.

Die in den Bespielen 1 bis 4 hergestellten Brote können auch halbgebacken erhalten werden, so dass sie nach Bedarf, bespielsweise nach dem Auftauen, in etwa 30 min. bei 150 - 170 °C im vorgeheizten Ofen fertig gebacken werden können.

### Beispiel 5 (Herstellung eines Aloe Vera Backmittels und Aloe Vera Bio-Backmittels sowie einer Aloe Vera Fertigbackmischung mit und ohne Sauerteig sowie Backkonzentratgemisch)

Zur Verarbeitung wurde gefrier- oder sprühgetrocknete Aloe Vera ( Barbadensis Miller ) verwendet. Der Rohstoff wurde einer Dampfbehandlung bei 38 °C und 87 % Luftfeuchtigkeit über 24 Stunden unterzogen. Dadurch wurde erreicht, dass der Rohstoff in der Vormischungsebene speziell mit dem Trägerstoff, Weizenmehl, verbunden wird. Sodann wurden 4% Aloe Vera Backmittel, gerechnet auf das Teiggewicht, einem Teig zugesetzt und dieser in herkömmlicher Art und Weise gebacken.

### Herstellungsbeispiel 6 (Herstellung einer Aloe Vera Fruchtpulpe)

Es wurden Blätter der Aloe Vera Barbadensis Miller verwendet, die von Hand filetiert werden. Es wurde ausschließlich das innere Blattgel ohne Aloin verwendet. Durch entsprechende Ernteverfahren wurde ein Aloeverosegehalt des fertigen Produktes von mindestens 1200 mg je Liter Fruchtpulpe erzielt. Durch Pasteurisierung wurde das Produkt ohne Konservierungsstoffe oder andere Zusatzstoffe haltbar gemacht

Durch entsprechende Verarbeitungs- und Filterverfahren erhielt die Fruchtpulpe einen für die weitere Verarbeitung notwendigen hohen Fruchtfleischanteil und eine entsprechende Konsistenz

### Beispiel 7 (Herstellung der Aloe Vera Wurstmischung)

Zur Verarbeitung wurde gefrier- oder sprühgetrocknete Aloe Vera ( Barbadensis Miller ) verwendet. Der Rohstoff wurde einer Dampfbehandlung bei 38 °C und 87 % Luftfeuchtigkeit über 24 Stunden unterzogen, wodurch erreicht wurde, dass der Rohstoff in der Vormischungsebene speziell mit dem Trägerstoff Salz verbunden wird. Das so erhaltene Gemisch zum Zusatz zu Wurstprodukten kann dann jeder beliebigen Wurstmischung zugesetzt werden.

### Beispiel 8 (Herstellung von Aloe Vera Nudeln und Pasta)

Zur Verarbeitung wurde gefrier- oder sprühgetrocknete Aloe Vera ( Barbadensis Miller ) verwendet. Der Rohstoff wurde einer Dampfbehandlung bei 38 °C und 87 % Luftfeuchtigkeit über 24 Stunden unterzogen, wodurch erreicht wurde, dass der Rohstoff in der Vormischungsebene speziell mit einem Trägerstoff, nämlich Wasser oder Eiern, verbunden wird. Die Herstellung der Nudelteige erfolgte mit einem aufbereiteten Konzentrat oder mit Aloe Vera Backmittel Universal oder Bio-Backmittel. Bei der Verarbeitung des Backmittels kann wie bei Backwaren beschrieben die Handhabung erfolgen

Bei der Verarbeitung des aufbereiteten Konzentrates wurde eine Vormischung aus 15 % der Eimasse und der entsprechenden Konzentratmenge hergestellt. Dies geschah bei einer Temperatur von 10 °C der Vormischung bis zur vollständigen Lösung des Konzentrates. Danach wurde vor der Teigbereitung die Vormischung mit der restlichen Eimasse gleichmäßig vermengt.

### Beispiel 9 (Herstellung von Aloe Vera Gold in Honig)

Zur Verarbeitung wurde gefrier- oder sprühgetrocknete Aloe Vera ( Barbadensis Miller ) verwendet. Der Rohstoff wurde einer Dampfbehandlung bei 38 °C und 87 % Luftfeuchtigkeit über 24 Stunden unterzogen, wodurch erreicht wurde, dass der Rohstoff in der Vormischungsebene speziell mit einem Trägerstoff, nämlich Wasser oder flüssige Zuckerstoffen, verbunden wird. Das aufbereitete Konzentrat wurde mit Wasser angefeuchtet und unter ständigem Rühren in eine temperierte Vormischung eingebracht. Nach dem völligen Auflösen in dieser Vormischung ist es möglich diese in den entsprechenden temperierten Honig einzubringen.

## Patentansprüche

1. Gemisch enthaltend Aloe Vera und einen Träger, **dadurch gekennzeichnet, dass** gefrier- oder sprühgetrockente Aloe Vera an einen Träger adsorbiert ist.

2. Gemisch nach Anspruch 1, wobei etwa 5 bis etwa 95 Gew.-% gefrieroder sprühgetrocknete Aloe Vera, bezogen auf das Gesamtgewicht des Gemisches, anwesend ist.

3. Gemisch nach einem der vorstehenden Ansprüche, wobei etwa 5 bis etwa 95 Gew.-% Träger, bezogen auf das Gesamtgewicht des Gemisches anwesend ist.

4. Gemisch nach einem der vorstehenden Ansprüche, wobei der Träger ausgewählt ist aus der Gruppe, bestehend aus Mehl, Salz, Zucker, Mehlbestandteile, Eier, Wasser, Gelatine und Getreideflocken.

5. Gemisch nach einem der vorstehenden Ansprüche, wobei die gefrieroder sprühgetrocknete Aloe Vera von Aloe Barbadensis stammt.

6. Verfahren zum Herstellen eines Gemisches nach einem der vorstehenden Ansprüche, wobei
- gefrier- oder sprühgetrocknete Aloe Vera mit dem Träger gemischt wird, und
- das so erhaltene Gemisch bei einer Temperatur von ≥ (größer gleich) etwa 30 °C bei einer Luftfeuchtigkeit von ≥ (größer gleich) etwa 80% wenigsten 10 h lang einer Dampfbehandlung unterworfen wird.

7. Verfahren nach Anspruch 6, wobei etwa 5 bis etwa 95 Gew.-% gefrier- oder sprühgetrocknete Aloe Vera, bezogen auf das Gesamtgewicht des Gemischs, verwendet werden.

8. Verfahren nach einem der Ansprüchen 6 oder 7, wobei etwa 5 bis etwa 95 Gew.-% Träger, bezogen auf das Gesamtgewicht des Gemisches verwendet wird.

9. Verfahren nach einem der Ansprüche 6 bis 8, wobei der Träger ausgewählt ist aus der Gruppe, bestehend aus Mehl, Salz, Zucker, Mehlbestandteile, Eier, Wasser, Gelatine und Getreideflocken.

10. Verfahren nach einem der Ansprüche 6 bis 9, wobei die gefrier- oder sprühgetrocknete Aloe Vera von Aloe Barbadensis stammt.

11. Verfahren nach einem der Ansprüche 6 bis 10, wobei die Temperatur bei der Dampfbehandlung etwa 30° C bis etwa 100 °C beträgt.

12. Verfahren nach einem der Ansprüche 6 bis 11, wobei die Luftfeuchtigkeit bei der Dampfbehandlung etwa 80% bis etwa 98% beträgt

13. Verfahren nach einem der Ansprüche 6 bis 12, wobei die Dampfbehandlung etwa 10 h bis etwa 36 h durchgeführt wird.

14. Gemisch enthaltend Aloe Vera und einen Träger, **dadurch gekennzeichnet, dass** gefrier- oder sprühgetrockente Aloe Vera an einen Träger adsorbiert ist und erhältlich nach dem Verfahren nach einem der Ansprüche 6 bis 13.

15. Lebensmittel umfassend ein Aloe Vera Gel, ein Aloe Vera Pulver und/oder ein Gemisch nach einem der Ansprüche 1 bis 5 oder 14.

16. Lebensmittel nach Anspruch 15, wobei die Lebensmittel ausgewählt sind aus der Gruppe, bestehend aus Bäckerei-, Konditoreiprodukten, Getränken, Kindernahrung, Babynahrung, Kaugummi, Bonbons, Eis, Pralinen, Schokolade, Wurstprodukte, Honig, Müsli, Teigwaren und Gelatineprodukten.

17. Lebensmittel nach Anspruch 16, wobei die Bäckerei- oder Konditoreiprodukte ausgewählt sind aus der Gruppe, bestehend aus Brot, Semmeln, Kuchen, Gebäck, Crackern, Keksen und Teigwaren.

18. Lebensmittel nach Anspruch 16, wobei die Getränke ausgewählt sind aus der Gruppe, bestehend aus Fruchtsäften, Milchgetränken, kohlensäurehaltigen Getränken oder Gemüsesäften.

19. Lebensmittel nach einem der Ansprüche 15 bis 18, wobei das Lebensmittel Aloe Vera Gel enthält, das erhältlich ist nach dem Verfahren, umfassend die Schritte
- Gewinnen des Aloe Vera Gels aus den Blättern der Aloe Vera Pflanze, und
- Abkühlen des Gels.

20. Lebensmittel nach Anspruch 19, wobei das Verfahren mindestens einen der nachstehenden Schritt zusätzlich umfasst:
- Erwärmen des aus der Matrix der Blätter der Aloe Vera Pflanze gewonnen Aloe Vera Gels, vorzugsweise auf eine Temperatur von etwa 30 bis etwa 70 °C,
- Zugeben von Ascorbinsäure,
- Zugeben eines Antioxidationsmittels, wie Natriumsulfit, Natriumbisulfit, Natriummetasulfit, Calciumedetat, Propylgallat und/oder Gylcin,
- Zugeben von weiteren die Farbe stabilisierenden Mitteln, wie Tocopherol oder Vitamin E,
- Zugeben von weiteren Additiven zum Stabilisieren des Antioxidationsmittels und/oder zum Anpassen des pH-Wert auf etwa 3,0 bis etwa 3,5, wie Citronensäure,
- Zugeben von oberflächenaktiven Stoffen, wie Cetylalkohol,
- Erwärmen während und nach der Zugabe vorzugsweise unter Rühren, insbesondere beibehalten einer Temperatur von etwa 30 bis etwa 70 °C bis möglicherweise vorhandene Bakterien abgetötet sind, vorzugsweise für mehr als 10 Minuten.

21. Lebensmittel nach einem der Ansprüche 16 bis 20, wobei etwa 10 bis etwa 100 g Aloe Vera Gel, Aloe Vera Pulver und oder ein Gemisch nach einem der Ansprüche 1 bis 5 oder 14, bezogen auf 1 kg Lebensmittel enthalten sind.

22. Lebensmittel nach einem der Ansprüche 16 bis 21, wobei das Aloe Vera Gel, das Aloe Vera Pulver und/oder das Gemisch nach einem der Ansprüche 1 bis 5 oder 14 von Aloe Barbadensis stammt.

23. Lebensmittel nach einem der Ansprüche 16 bis 22, wobei das Aloe Vera Gel, Aloe Vera Pulver und/oder das Gemisch nach einem der Ansprüche 1 bis 5 oder 14, zusätzlich Additive ausgewählt aus der Gruppe, bestehend aus Antioxidationsmitteln, Konservierungsstoffe, Stabilisatoren, Emulgatoren und Geliermitteln enthält.

24. Verwendung von Aloe Vera Gel, Aloe Vera Pulver und/oder eines Gemisches nach einem der Ansprüche 1 bis 5 oder 14 bei der Herstellung von Lebensmitten, indem diesen Aloe Vera Gel, Aloe Vera Pulver und/oder ein Gemisch nach einem der Ansprüche 1 bis 5 oder 14 zugesetzt wird.

25. Verwendung nach Anspruch 24, wobei das Lebensmittel ausgewählt ist aus der Gruppe, bestehend aus Bäckerei-, Konditoreiprodukten, Getränken, Kindernahrung, Babynahrung, Kaugummi, Bonbons, Eis, Pralinen, Schokolade, Wurstwaren, Honig und Gelatineprodukten, insbesondere Bäckerei- und Konditoreiprodukten, wie Brot.

26. Verwendung nach einem der Ansprüche 24 oder 25, wobei Aloe Vera Gel verwendet wird.

27. Verwendung nach einem der Ansprüche 24 bis 26, wobei das Aloe Vera Gel erhältlich ist durch ein Verfahren umfassend die Schritte,
- Gewinnen des Aloe Vera Gels aus den Blättern der Aloe Vera Pflanze, und
- Abkühlen des Gels.

28. Verwendung nach Anspruch 27, wobei das Verfahren mindestens einen der nachstehenden Schritt zusätzlich umfasst:
- Erwärmen des aus der Matrix der Blätter der Aloe Vera Pflanze gewonnen Aloe Vera Gels, vorzugsweise auf eine Temperatur von etwa 30 bis etwa 70 °C,
- Zugeben von Ascorbinsäure,
- Zugeben eines Antioxidationsmittels, wie Natriumsulfit, Natriumbisulfit, Natriummetasulfit, Calciumedetat, Propylgallat und/oder Gylcin,
- Zugeben von weiteren die Farbe stabilisierenden Mitteln, wie Tocopherol oder Vitamin E,
- Zugeben von weiteren Additiven zum Stabilisieren des Antioxidationsmittels und/oder zum Anpassen des pH-Wert auf etwa 3,0 bis etwa 3,5, wie Citronensäure,
- Zugeben von oberflächenaktiven Stoffen, wie Cetylalkohol,
- Erwärmen während und nach der Zugabe vorzugsweise unter Rühren, insbesondere beibehalten einer Temperatur von etwa 30 bis etwa 70 °C bis möglicherweise vorhandene Bakterien abgetötet sind, vorzugsweise für mehr als 10 Minuten.
